# EUROPEAN PATENT SPECIFICATION

(11) **EP 1 357 362 B1**
(45) Date of publication and mention of the grant of the patent: **28.12.2005**
(21) Application number: 03252545.3
(22) Date of filing: 23.04.2003
(51) Int. Cl.: G01C 21/36, G08G 1/0969

(54) **Three-dimensional information display apparatus**
Vorrichtung für die Darstellung von Informationen in drei Dimensionen
Dispositif d'affichage d'information tridimensionelle

(30) Priority: 26.04.2002 JP 2002127075
(43) Date of publication of application: 29.10.2003
(73) Proprietor: Pioneer Corporation, Meguro-ku, Tokyo (JP)
(72) Inventor: Kumagai, Shunichi, c/o Pioneer Corporation, Kawagoe-shi, Saitama (JP)
(74) Representative: Haley, Stephen

(56) References cited:
- EP-A- 1 189 176
- US-A1- 2002 038 181

## Description

The present invention relates to a three-dimensional information display apparatus suited for use with a system such as a car navigation system, for displaying three-dimensional map information including a road to a destination and three-dimensional route information indicating a route to the destination.

### [Description of the Related Art]

Hitherto, a car navigation system for displaying map information and route information, thereby guiding a vehicle to a destination has been known. To display map information two-dimensionally in such a car navigation system, route information is displayed in a drawing-over (overwriting) manner because the concept of height does not exist. Alternatively, the concept of layers different in dimension as in cell animation is provided, whereby route information is displayed in a drawing-over (overwriting) manner. On the other hand, to display map information three-dimensionally, the concept of height exists and therefore route information is drawn in a three-dimensional coordinate system intact for display.

As making map representation more real in a car navigation system is advancing, to efficiently reproduce the scene as the driver sees, three-dimensional display is optimum; however, if map information and route information are displayed intact, the information and the route information may not necessarily become easy-to-see for the driver. Examples of prior art methods can be found in US-A1-2002/0038181 and EP-A2-1189176.

It is therefore an object of the invention to provide a three-dimensional information display apparatus comprising:
an information processing means that generates three-dimensional map information including an information of a road to a destination and generates three-dimensional route information indicating a route to the destination; and
a three-dimensional information display section that displays a three-dimensional map including the road and the route based on the three-dimensional map information and the three-dimensional route information generated by the information processing means, the apparatus characterised in that:
   in the event that the road to the destination contains an uphill road part, the information processing means generates the three-dimensional route information so as to display the route to the destination on the underside of a non-uphill road portions which are higher than the viewpoint on the three-dimensional map.

Preferably, the information processing means generates the three-dimensional route information so as to display a road portion higher than the viewpoint on the three-dimensional map containing the uphill road part in a translucent manner.

Preferably, in the event that the road to the destination included in the three-dimensional map information contains a merging part, the information processing means generates the three-dimensional route information so as to display a merging road so that the height on the three-dimensional map of the merging road matches the height on the three-dimensional map of a road to be merged, just before merging.

Preferably, in the event that the road to the destination included in the three-dimensional map information contains a merging part, the information processing means divides a three-dimensional polygon forming a merging road on the way and matches the height on the three-dimensional map of the merging road with the height on the three-dimensional map of a three-dimensional polygon forming a road to be merged, thereby generating the three-dimensional map information so as to display the merging road so that the height on the three-dimensional map of the merging road matches the height on the three-dimensional map of the road to be merged just before merging.

Preferably, in the event that the road to the destination included in the three-dimensional map information contains a branching part, the information processing means generates the three-dimensional map information so as to display a branching road so that the height on the three-dimensional map of the branching road matches the height on the three-dimensional map of a road to be branched, just before branching.

Preferably, the information processing means generates the three-dimensional route information so as to display the route to the destination three-dimensionally.

Preferably, the information processing means generates the three-dimensional map information so as to display the road included in the three-dimensional map information with a transparency factor partially varied.

Preferably, the information processing means generates the three-dimensional map information so as to display the three-dimensional map information with the viewpoint on the three-dimensional map temporarily varied, and
the information processing means generates the three-dimensional route information so as to display the three-dimensional route information with the viewpoint on the three-dimensional map temporarily varied in association with the display of the three-dimensional map information.

In the drawings:

The above objects and advantages of the present invention will become more apparent by describing in detail preferred exemplary embodiments thereof with reference to the accompanying drawings, wherein:
Fig. 1 is a block diagram showing the configuration of a three-dimensional information display apparatus to describe the concept of the invention;
Fig. 2 is a block diagram showing the configuration of a car navigation system common to first to eighth embodiments incorporating the invention;
Fig. 3 is a drawing to describe processing in a first embodiment of the invention;
Fig. 4 is a drawing to describe processing in the first embodiment of the invention;
Fig. 5 is a drawing to describe processing in a second embodiment of the invention;
Fig. 6 is a drawing to describe processing in a third embodiment of the invention;
Fig. 7 is a drawing to describe processing in a fourth embodiment of the invention;
Fig. 8 is a drawing to describe processing in a sixth embodiment of the invention; and
Fig. 9 is a drawing to describe processing in an eighth embodiment of the invention.

Referring now to the accompanying drawings, An embodiment according to the invention will be described below.

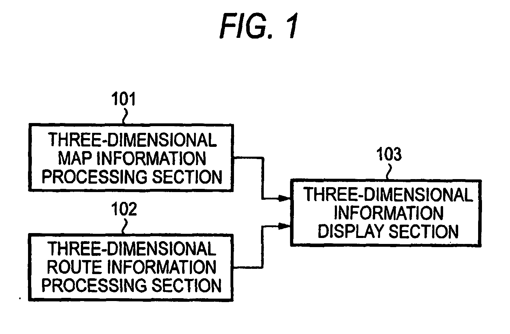

To begin with, the concept of the invention will be discussed with reference to Fig. 1. In Fig. 1, a three-dimensional information display apparatus according to the invention includes three-dimensional map information processing section 101 adapted to process three-dimensional map information including a road to a destination, three-dimensional route information processing section 102 adapted to process three-dimensional route information indicating a route to the destination, and three-dimensional information display section 103 for displaying the three-dimensional map information processed by the three-dimensional map information processing section 101 and the three-dimensional route information processed by the three-dimensional route information processing section 102.

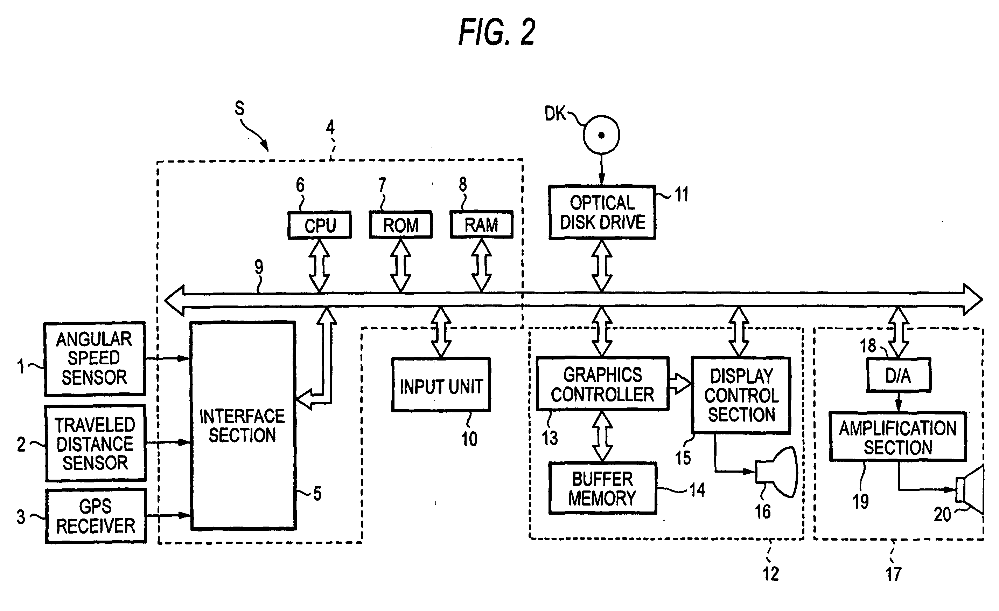

Referring now to the accompanying drawings (Figs. 2 to 9), there are shown first to eighth embodiments of the invention. Fig. 2 is a block diagram showing a configuration of a car navigation system common to the first to eighth embodiments incorporating the invention. In Fig. 2, a car navigation system S comprises an angular velocity sensor 1 for detecting the angular velocity when the direction of the vehicle installing the car navigation system S is changed and outputting angular velocity data and relative bearing data, a mileage sensor 2 for counting the number of pulses in pulse signal in a predetermined period output with rotation of wheels, thereby calculating the number of pulses per revolution of wheel and outputting mileage data based on the number of pulses per revolution, a GPS receiver 3 for receiving radio waves from a GPS (Global Positioning System) satellite, outputting GPS positioning data, and also outputting absolute bearing data in the traveling direction of the vehicle, a system controller 4 for controlling the whole car navigation system based on the angular velocity data, the relative bearing data, the mileage data, the GPS positioning data, and the absolute bearing data, an input unit 10 such as a remote control for entering various pieces of data, an optical disk drive 11 for reading out various pieces of data such as map data containing road data indicating the number of lanes, the road widths, and the like, and data indicating the names of facilities or detailed information from an optical disk DK such as DVD (Digital Versatile Disk), under the control of the system controller 4, a display unit 12 for displaying various pieces of display data under the control of the system controller 4, and an audio playback unit 17 for playing back various pieces of audio data under the control of the system controller 4.

The system controller 4 includes an interface section 5 for performing interface operation with external sensors such as the GPS receiver 3, a CPU (Central Processing Unit) 6 for controlling the whole system controller 4, ROM (Read-Only Memory) 7 for storing a control program for controlling the system controller 4, and RAM (Random Access Memory) 8 having nonvolatile memory for storing various pieces of data such as route data preset by the user (for example, driver) through the input unit 10 in a readable manner. The system controller 4 is connected to the input unit 10, the optical disk drive 11, the display unit 12, and the audio playback unit 17 via a bus line 9. The CPU 6 is provided as the three-dimensional map information processing section 101 and the three-dimensional route information processing section 102.

The display unit 12 includes a graphics controller 13 for controlling the whole display unit 12 based on control data sent from the CPU 6 via the bus line 9, buffer memory 14 implemented as memory such as VRAM (Video RAM) for temporarily storing image data that can be displayed in an instant, and a display control section 15 for controlling a display 16 such as an LCD or a CRT display based on control data output from the graphics controller 13. The display 16 is provided as the three-dimensional information display section 103.

The audio playback unit 17 includes a D/A converter 18 for converting audio digital data sent from the optical disk drive 11 or the RAM 8 via the bus line 9 into an analog signal, an amplification section 19 for amplifying the audio analog signal output from the D/A converter 18, and a loudspeaker 20 for converting the amplified audio analog signal into audio and outputting the audio.

When the user (for example, driver) enters a destination through the input unit 10 in the described car navigation system S, data such as the map data recorded on the optical disk DK is read out by the optical disk drive 11 based on the input information and is stored in the RAM 8. Next, the CPU 6 generates three-dimensional map information including a road to the destination and three-dimensional route information indicating a route to the destination, and again stores the information in the RAM 8. Then, the CPU 6 performs appropriate processing as described later for the three-dimensional map information and the three-dimensional route information stored in the RAM 8, and displays the processed three-dimensional map information and the processed three-dimensional route information on the display 16.

### [First embodiment]

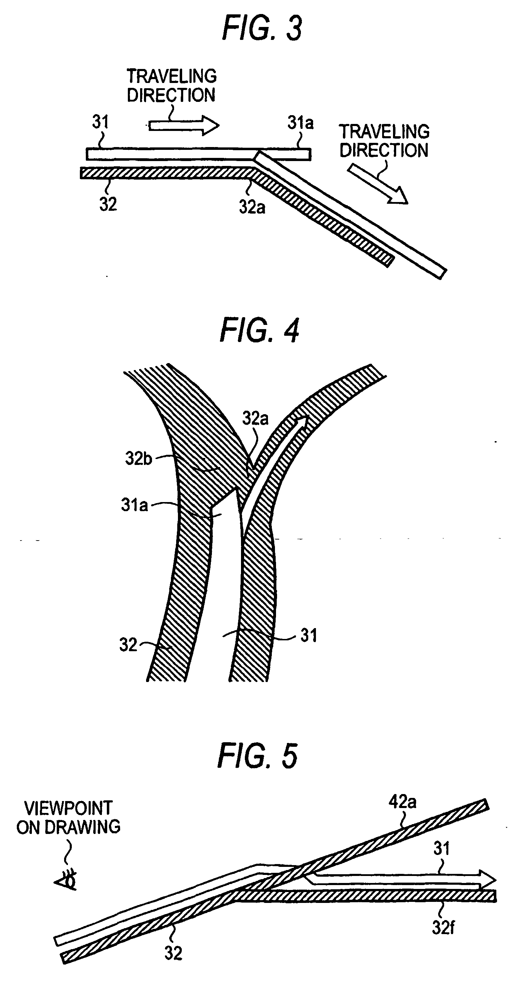

A first embodiment of the invention is intended for improving display when the road to the destination included in three-dimensional map information contains a downward branch part (for example, a downward part of a road of a three-dimensional intersection) . In the first embodiment, a CPU 6 as three-dimensional route information processing section processes three-dimensional route information so as to display a part 31a of a route 31 extended to a road to be branched 32b adequately while maintaining the same height as the height on drawing of the route 31 at a downward branch part 32a existing in a road 32 to the destination. The road 32 and the route 31 are shown in the state viewed from the side for easy understanding in Fig. 3; in fact, however, they are displayed three-dimensionally as shown in Fig. 4. According to the first embodiment, the part 31a of the route 31 to the destination is extended adequately to the road to be branched 32b, so that the visibility of the downward branch part 32a can be enhanced.

### [Second embodiment]

A second embodiment of the invention is intended for improving display when a branching road branching from the road to the destination included in three-dimensional map information contains an uphill road part. In the second embodiment, a CPU 6 as three-dimensional map information processing section processes three-dimensional map information so as to display the road portion higher than the viewpoint on drawing (the viewpoint on displaying three-dimensional map information) containing an uphill road part 42a branching from a road 32 (shown with a route 31) to the destination in a translucent manner, as shown in Fig. 5. The road portion higher than the viewpoint on drawing containing the uphill road part 42a, the road 32, and the route 31 are shown in the state viewed from the side for easy understanding in Fig. 5; in fact, however, they are displayed three-dimensionally. According to the second embodiment, the road portion higher than the viewpoint on drawing containing the uphill road part 42a is displayed in a translucent manner, so that a part 32f of the road 32 to the destination existing ahead of the uphill road part 42a is seen through the uphill road part 42a and therefore the visibility of the road can be enhanced.

### [Third embodiment]

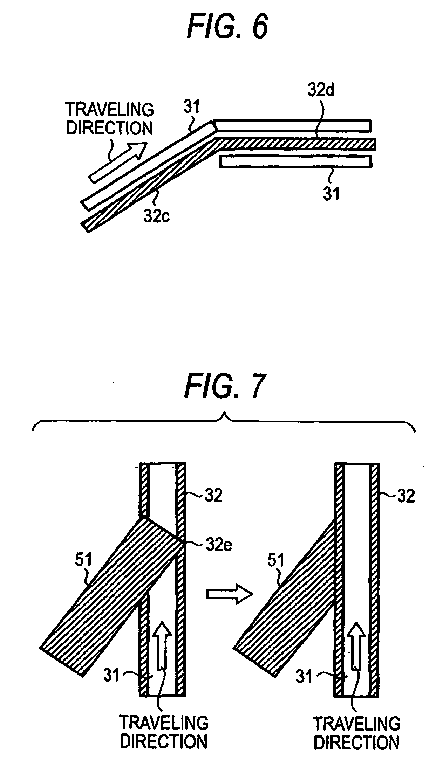

A third embodiment of the invention is intended for improving display when the road to the destination included in three-dimensional map information contains an uphill road part. In the third embodiment, a CPU 6 as three-dimensional route information processing section processes three-dimensional route information so as to display a route 31 to the destination below a road portion 32d higher than the viewpoint on drawing (the viewpoint on displaying three-dimensional map information) except an uphill road part 32c, as shown in Fig. 6. The road portion 32d higher than the viewpoint on drawing except the uphill road part 32c and the route 31 are shown in the state viewed from the side for easy understanding in Fig. 6; in fact, however, they are displayed three-dimensionally. According to the third embodiment, the route 31 to the destination is displayed below the road portion 32d higher than the viewpoint on drawing except the uphill road part 32c, so that the visibility of the route 31 when viewed from below can be enhanced.

### [Fourth embodiment]

A fourth embodiment of the invention is intended for improving display when the road to the destination included in three-dimensional map information contains a merging part. In the fourth embodiment, a CPU 6 as three-dimensional map information processing section processes three-dimensional map information so as to display a merging road 51 so that the height on drawing of the merging road 51 matches the height on drawing of a road to be merged 32 just before merging. Specifically, the CPU 6 as the three-dimensional map information processing section divides the three-dimensional polygon forming the merging road 51 on the way and matches the height on drawing of the merging road 51 with the height on drawing of the three-dimensional polygon forming the road to be merged 32, thereby processing the three-dimensional map information. In association with this, the CPU 6 as three-dimensional route information processing section processes three-dimensional route information so as to display the route 31 completely just before merging. The merging road 51, the road to be merged 32, and the route 31 are shown in the state viewed from the top for easy understanding in Fig. 7; in fact, however, they are displayed three-dimensionally. According to the fourth embodiment, the merging road 51 is displayed so that the height on drawing of the merging road 51 matches the height on drawing of the road to be merged 32 just before merging, and therefore the recognition rate of a merging part 32e can be enhanced.

### [Fifth embodiment]

A fifth embodiment of the invention is intended for improving display when the road to the destination included in three-dimensional map information contains a branch part. In the fifth embodiment, although not shown by reference to the drawings, as in the same manner of the fourth embodiment, a CPU 6 as three-dimensional map information processing section processes three-dimensional map information so as to display a branch road so that the height on drawing of the branch road matches the height on drawing of a road to be branched just before branching. According to the fifth embodiment, the branch road is displayed so that the height on drawing of the branch road matches the height on drawing of the road to e branched just before branching, and therefore the visibility of the branch part can be enhanced.

### [Sixth embodiment]

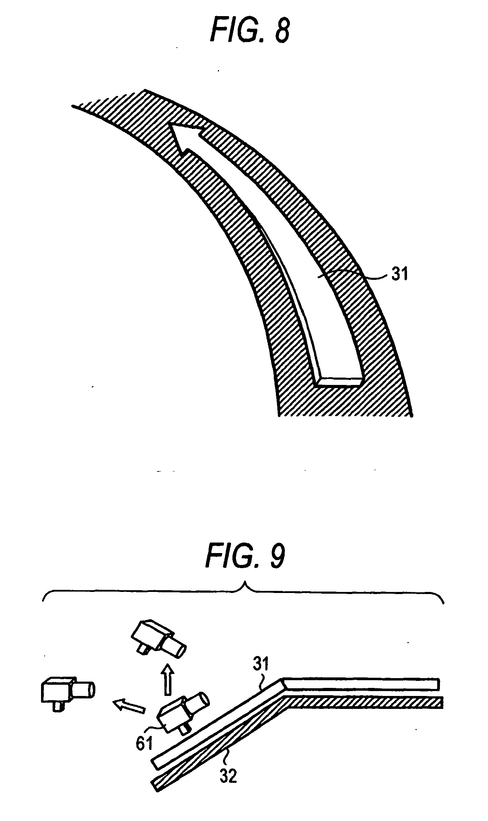

A sixth embodiment of the invention is intended for improving display of a route to the destination. In this case, a CPU 6 as three-dimensional route information processing section processes three-dimensional route information so as to display a route 31 to the destination three-dimensionally, as shown in Fig. 8. According to the sixth embodiment, the route 31 to the destination is displayed three-dimensionally, so that the visibility of the route 31 when viewed from the side can be enhanced.

### [Seventh embodiment]

A seventh embodiment of the invention is intended for improving display of a road. In this case, although not shown by reference to the drawings, a CPU 6 as three-dimensional map information processing section processes three-dimensional map information so as to display the road included in the three-dimensional map information with the transparency factor partially varied (for example, with the transparency factor varied from one place to another of a three-dimensional intersection). According to the seventh embodiment, the road included in the three-dimensional map information is displayed with the transparency factor partially varied, so that the visibility of the route to the destination can be enhanced.

### [Eighth embodiment]

An eighth embodiment of the invention is intended for improving display of three-dimensional map information and three-dimensional route information. In the eighth embodiment, a CPU 6 as three-dimensional map information processing section processes three-dimensional map information so as to display the three-dimensional map information with the viewpoint on drawing (the viewpoint on displaying the three-dimensional map information) temporarily varied, and the CPU 6 as three-dimensional route information processing section processes three-dimensional route information so as to display the three-dimensional route information temporarily with the viewpoint on drawing temporarily varied in association with the display of the three-dimensional map information. For example, as shown in Fig. 9, a road 32 to the destination included in the three-dimensional map information is displayed with the viewpoint on drawing changed to a high position (displayed as if position of a camera 61 were changed to a high position) and a route 31 to the destination included in the three-dimensional route information is displayed with the viewpoint on drawing changed to a high position in association with the display of the road 32, the visibility of the whole route can be enhanced. Thus, according to the eighth embodiment, the three-dimensional map information is displayed with the viewpoint on drawing temporarily varied, and the three-dimensional route information is displayed with the viewpoint on drawing temporarily varied in association with the display of the three-dimensional map information, so that the visibility of the route 31 can be enhanced.

As seen from the description above, the three-dimensional information display apparatus according to the invention performs appropriate processing (so-called deforming) for the three-dimensional map information and the three-dimensional route information for display, and can enhance the visibility about the map information and the route information without impairing reality of map representation.

Although the present invention has been shown and described with reference to specific preferred embodiments, various changes and modifications will be apparent to those skilled in the art from the teachings herein. Such changes and modifications as are obvious are deemed to come within the scope and contemplation of the invention as defined in the appended claims.

## Claims

1. A three-dimensional information display apparatus comprising:
an information processing means that generates three-dimensional map information including an information of a road to a destination and generates three-dimensional route information indicating a route to the destination; and
a three-dimensional information display section that displays a three-dimensional map including the road and the route based on the three-dimensional map information and the three-dimensional route information generated by the information processing means, the apparatus **characterised in that**:
in the event that the road to the destination contains an uphill road part, the information processing means generates the three-dimensional route information so as to display the route to the destination on the underside of non-uphill road portions which are higher than the viewpoint on the three-dimensional map.

2. The three-dimensional information display apparatus of claim 1, wherein the information processing means generates the three-dimensional route information so as to display a road portion higher than the viewpoint on the three-dimensional map containing the uphill road part in a translucent manner.

3. The three-dimensional information display apparatus of claim 1, wherein when the road to the destination included in the three-dimensional map information contains a merging part, the information processing means generates the three-dimensional route information so as to display a merging road so that the height on the three-dimensional map of the merging road matches the height on the three-dimensional map of a road to be merged, just before merging.

4. The three-dimensional information display apparatus of claim 1, wherein in the event that the road to the destination included in the three-dimensional map information contains a merging part, the information processing means divides a three-dimensional polygon forming a merging road on the way and matches the height on the three-dimensional map of the merging road with the height on the three-dimensional map of a three-dimensional polygon forming a road to be merged, thereby generating the three-dimensional map information so as to display the merging road so that the height on the three-dimensional map of the merging road matches the height on the three-dimensional map of the road to be merged just before merging.

5. The three-dimensional information display apparatus of claim 1, wherein in the event that the road to the destination included in the three-dimensional map information contains a branching part, the information processing means generates the three-dimensional map information so as to display a branching road so that the height on the three-dimensional map of the branching road matches the height on the three-dimensional map of a road to be branched, just before branching.

6. The three-dimensional information display apparatus of claim 1, wherein the information processing means generates the three-dimensional route information so as to display the route to the destination three-dimensionally.

7. The three-dimensional information display apparatus of claim 1, wherein the information processing means generates the three-dimensional map information so as to display the road included in the three-dimensional map information with a transparency factor partially varied.

8. The three-dimensional information display apparatus of claim 1, wherein the information processing means generates the three-dimensional map information so as to display the three-dimensional map information with the viewpoint on the three-dimensional map temporarily varied, and
wherein the information processing means generates the three-dimensional route information so as to display the three-dimensional route information with the viewpoint on the three-dimensional map temporarily varied in association with the display of the three-dimensional map information.

## Patentansprüche

1. Eine Anzeigevorrichtung für dreidimensionale Informationen, umfassend:
eine Informationsverarbeitungseinrichtung, die dreidimensionale Karteninformationen erzeugt, die Informationen über eine Straße zu einem Ziel einschließen, und dreidimensionale Routeninformationen erzeugt, die eine Route zu dem Ziel angeben; und
einen Anzeigeabschnitt für dreidimensionale Informationen, der eine dreidimensionale Karte einschließlich der Straße und der Route auf der Grundlage der dreidimensionalen Karteninformationen und der dreidimensionalen Routeninformationen, die von der Informationsverarbeitungseinrichtung erzeugt werden, anzeigt, wobei die Vorrichtung **dadurch gekennzeichnet ist, dass**:
in dem Fall, in dem die Straße zu dem Ziel einen Bergauf-Straßenteil enthält, die Informationsverarbeitungseinrichtung die dreidimensionalen Routeninformationen so erzeugt, dass die Route zu dem Ziel auf der Unterseite der Nicht-Bergauf-Straßenteile, die höher als der Standpunkt in der dreidimensionalen Karte liegen, angezeigt wird.

2. Die Anzeigevorrichtung für dreidimensionale Informationen von Anspruch 1, worin die Informationsverarbeitungseinrichtung die dreidimensionalen Routeninformationen so erzeugt, dass ein Straßenteil, der höher als der Standpunkt in der dreidimensionalen Karte liegt, angezeigt wird, der den Bergauf-Straßenteil auf eine durchscheinende Weise enthält.

3. Die Anzeigevorrichtung für dreidimensionale Informationen von Anspruch 1, worin, wenn die Straße zu dem Ziel, die in den dreidimensionalen Karteninformationen enthalten ist, einen in einen anderen übergehenden Teil enthält, die Informationsverarbeitungseinrichtung die dreidimensionalen Routeninformationen so erzeugt, dass eine in eine andere übergehende Straße so angezeigt wird, dass kurz vor dem Ineinanderübergehen die Höhe in der dreidimensionalen Karte der in eine andere übergehenden Straße der Höhe in der dreidimensionalen Karte einer Straße angeglichen ist, in die übergegangen wird.

4. Die Anzeigevorrichtung für dreidimensionale Informationen von Anspruch 1, worin in dem Fall, in dem die Straße zu dem Ziel, die in den dreidimensionalen Karteninformationen enthalten ist, einen in einen anderen übergehenden Teil enthält, die Informationsverarbeitungseinrichtung ein dreidimensionales Polygon, das eine in eine andere übergehende Straße auf dem Weg ausbildet, unterteilt und die Höhe in der dreidimensionalen Karte der in eine andere übergehenden Straße der Höhe in der dreidimensionalen Karte eines dreidimensionalen Polygons, das eine Straße, in die übergegangen wird, ausbildet, angleicht, wodurch sie die dreidimensionalen Karteninformationen so erzeugt, dass die in eine andere übergehende Straße so angezeigt wird, dass kurz vor dem Ineinanderübergehen die Höhe in der dreidimensionalen Karte der in eine andere übergehenden Straße der Höhe in der dreidimensionalen Karte der Straße angeglichen ist, in die übergegangen wird.

5. Die Anzeigevorrichtung für dreidimensionale Informationen von Anspruch 1, worin in dem Fall, in dem die Straße zu dem Ziel, die in den dreidimensionalen Karteninformationen enthalten ist, einen abzweigenden Teil enthält, die Informationsverarbeitungseinrichtung die dreidimensionalen Karteninformationen so erzeugt, dass kurz vor der Abzweigung eine abzweigende Straße so angezeigt wird, dass die Höhe in der dreidimensionalen Karte der abzweigenden Straße der Höhe in der dreidimensionalen Karte einer Straße, in die abgezweigt wird, angeglichen ist.

6. Die Anzeigevorrichtung für dreidimensionale Informationen von Anspruch 1, worin die Informationsverarbeitungseinrichtung die dreidimensionalen Routeninformationen so erzeugt, dass die Route zu dem Ziel dreidimensional angezeigt wird.

7. Die Anzeigevorrichtung für dreidimensionale Informationen von Anspruch 1, worin die Informationsverarbeitungseinrichtung die dreidimensionalen Karteninformationen so erzeugt, dass die Straße, die in den dreidimensionalen Karteninformationen enthalten ist, mit einem teilweise variierenden Transparenzfaktor dargestellt wird.

8. Die Anzeigevorrichtung für dreidimensionale Informationen von Anspruch 1, worin die Informationsverarbeitungseinrichtung die dreidimensionalen Karteninformationen so erzeugt, dass die dreidimensionalen Karteninformationen mit dem Standpunkt in der dreidimensionalen Karte angezeigt werden, der zeitlich variiert, und
worin die Informationsverarbeitungseinrichtung die dreidimensionalen Routeninformationen so erzeugt, dass die dreidimensionalen Routeninformationen mit dem zeitlich variierenden Standpunkt in der dreidimensionalen Karte in Verbindung mit der Anzeige der dreidimensionalen Karteninformationen angezeigt werden.

## Revendications

1. Dispositif d'affichage d'informations tridimensionnelles comprenant :
un moyen de traitement d'informations qui génère des informations de cartographie tridimensionnelles comprenant des informations concernant un itinéraire vers une destination et qui génère des informations d'itinéraire tridimensionnelles indiquant un itinéraire vers la destination, et
une séquence d'affichage d'informations tridimensionnelles qui affiche une carte tridimensionnelle comprenant la route et l'itinéraire sur la base des informations de cartographie tridimensionnelles et des informations d'itinéraire tridimensionnelles générées par le moyen de traitement d'informations, le dispositif étant **caractérisé en ce que** :
dans le cas où la route vers la destination comprend une partie de route en côte, le moyen de traitement d'informations génère des informations d'itinéraire tridimensionnelles de façon à afficher l'itinéraire vers la destination sur le côté inférieur des parties de route sans côte qui sont plus élevées que le point de vue de la carte tridimensionnelle.

2. Dispositif d'affichage d'informations tridimensionnelles selon la revendication 1, dans lequel le moyen de traitement d'informations génère des informations d'itinéraire tridimensionnelles de façon à afficher une partie de route plus élevée que le point de vue sur la carte tridimensionnelle contenant la partie de route en côte d'une manière translucide.

3. Dispositif d'affichage d'informations tridimensionnelles selon la revendication 1, dans lequel, lorsque la route vers la destination incluse dans les informations de cartographie tridimensionnelles contient une partie de jonction, le moyen de traitement d'informations génère les informations d'itinéraire tridimensionnelles de façon à afficher une route de jonction de manière à ce que la hauteur sur la carte tridimensionnelle de la route de jonction corresponde à la hauteur sur la carte tridimensionnelle d'une route à rejoindre, juste avant la jonction.

4. Dispositif d'affichage d'informations tridimensionnelles selon la revendication 1, dans lequel, dans le cas où la route vers la destination incluse dans les informations de cartographie tridimensionnelles contient une partie de jonction, le moyen de traitement d'informations divise un polygone tridimensionnel formant une route de jonction sur le parcours et fait correspondre la hauteur sur la carte tridimensionnelle de la route de jonction avec la hauteur sur la carte tridimensionnelle d'un polygone tridimensionnel formant une route devant être rejointe, en générant ainsi les informations de cartographie tridimensionnelles de façon à afficher la route de jonction de manière à ce que la hauteur de la route de jonction sur la carte tridimensionnelle corresponde à la hauteur, sur la carte tridimensionnelle, de la route à rejoindre juste avant la jonction.

5. Dispositif d'affichage d'informations tridimensionnelles selon la revendication 1, dans lequel, dans le cas où la route vers la destination incluse dans les informations de cartographie tridimensionnelles contient une partie de division, le moyen de traitement d'informations génère les informations de cartographie tridimensionnelles de façon à afficher une route se divisant de manière à ce que la hauteur, sur la carte tridimensionnelle, de la route se divisant corresponde à la hauteur, sur la carte tridimensionnelle, d'une route devant se diviser, juste avant la division.

6. Dispositif d'affichage d'informations tridimensionnelles selon la revendication 1, dans lequel le moyen de traitement d'informations génère les informations d'itinéraire tridimensionnelles de façon à afficher l'itinéraire vers la destination dans les trois dimensions.

7. Dispositif d'affichage d'informations tridimensionnelles selon la revendication 1, dans lequel le moyen de traitement d'informations génère les informations de cartographie tridimensionnelles de façon à afficher la route incluse dans les informations de cartographie tridimensionnelles avec un facteur de transparence qui varie partiellement.

8. Dispositif d'affichage d'informations tridimensionnelles selon la revendication 1, dans lequel le moyen de traitement d'informations génère les informations de cartographie tridimensionnelles de façon à afficher des informations de cartographie tridimensionnelles, le point de vue sur la carte tridimensionnelle étant amené à varier temporairement, et
dans lequel le moyen de traitement d'informations génère les informations d'itinéraire tridimensionnelles de façon à afficher les informations d'itinéraire tridimensionnelles, le point de vue sur la carte tridimensionnelle étant amené à varier temporairement en association avec l'affichage des informations de cartographie tridimensionnelles.
